# EUROPÄISCHE PATENTSCHRIFT

(11) **EP 2 766 322 B1**
(45) Veröffentlichungstag und Bekanntmachung des Hinweises auf die Patenterteilung: **15.02.2017**
(21) Anmeldenummer: 13798311.0
(22) Anmeldetag: 26.11.2013
(51) Int. Cl.: C04B 33/04, C04B 33/13, C04B 35/047, C04B 35/103, C04B 35/18, C04B 35/20, C04B 35/42, C04B 35/565, C04B 35/63, C04B 35/634, C04B 35/632, C04B 35/043, C04B 35/057, C04B 35/06, C04B 35/44, C04B 35/66, F23M 5/00, F27D 1/00, C04B 35/101, C04B 35/443

(54) **VERWENDUNG VON UNGEBRANNTEN FEUERFESTEN ERZEUGNISSEN ALS ZUSTELLUNG VON GROSSVOLUMIGEN INDUSTRIEÖFEN SOWIE INDUSTRIEOFEN AUSGEKLEIDET MIT DEN UNGEBRANNTEN FEUERFESTEN ERZEUGNISSEN**
USE OF UNSHAPED REFRACTORY PRODUCTS AS LINING FOR LARGE-SCALE INDUSTRIAL FURNACES AND INDUSTRIAL FURNACE LINED WITH THE UNFIRED REFRACTORY PRODUCTS
UTILISATION DES PRODUITS RÉFRACTAIRES NON CUITS, NON FACONNES POUR REVÊTER DES GRANDS FOURS INDUSTRIELS ET FOURS INDUSTRIELS REVÊTES AVEC LES PRODUITS RÉFRACTAIRES NON CUITS

(30) Priorität: 29.11.2012 DE 102012023318
(43) Veröffentlichungstag der Anmeldung: 20.08.2014
(73) Patentinhaber: Refratechnik Holding GmbH, 85737 Ismaning (DE)
(72) Erfinder: SCHEUBEL, Bernd, 81827 München (DE); JANSEN, Helge, 37133 Friedland (DE); KLISCHAT, Hans-Jürgen, 37083 Göttingen (DE); KIZIO, Rolf-Dieter, 37130 Gleichen (DE); WIRSING, Holger, 37081 Göttingen (DE)
(74) Vertreter: Patent- und Rechtsanwälte Dr. Solf & Zapf
(86) Internationale Anmeldenummer: PCT/EP2013/074785
(87) Internationale Veröffentlichungsnummer: WO 2014/083016

(56) Entgegenhaltungen:
- EP-A1- 0 940 376
- EP-A1- 2 277 842
- WO-A1-2014/031574
- Gerald Routschka / Hartmut Wuthnow: "Praxishandbuch Feuerfeste Werkstoffe; 5. Auflage 2011; Vulkan Velag", 14. Oktober 2011 (2011-10-14), Essen (DE), XP002717961, ISBN: 978-3-8027-3161-7 Seiten: Deckblatt; IV; 64-65; 104-105, 118-140 und 150-174.
- "3.1 Bauxiterzeugnisse" In: Wolfgang Schulle: "Feuerfeste Werkstoffe", 1 January 1990 (1990-01-01), Deutscher Verlag für Grundstoffindustrie, Leibzig ISBN: 3-342-00306-5 page Deckblatt, Seite I, Seiten 213-214, * Seite 213-216 *
- 14 October 2011 (2011-10-14), PRAXISHANDBUCH FEUERFESTE WERKSTOFFE : AUFBAU - EIGENSCHAFTEN - PRÜFUNG, VULKAN-VERL, ESSEN, XP002717961, ISBN: 978-3-8027-3161-7

## Beschreibung

Die Erfindung betrifft die Verwendung von ungebrannten feuerfesten Erzeugnissen in Form von gepressten Formkörpern zur Erstellung eines feuerfesten Mauerwerks - im Folgenden auch Futter oder Auskleidung oder Zustellung genannt - in einem großvolumigen Industrieofen, in dem Zement, Kalk, Magnesia oder Doloma in oxidierender oder im Wesentlichen oxidierender Atmosphäre gebrannt werden. Die Erfindung betrifft zudem einen aus der Verwendung resultierenden großvolumigen Industrieofen. "Im Wesentlichen oxidierender Atmosphäre" soll bedeuten, dass während des Betriebs eines Industrieofens das Mauerwerk zeitlich überwiegend mit oxidierender Atmosphäre und nur teilzeitweise auch mit neutraler Atmosphäre beaufschlagt wird.

Zement, Kalk, Magnesia oder Doloma werden in großvolumigen Drehrohr- oder Schachtöfen in oxidierender oder im Wesentlichen oxidierender Atmosphäre gebrannt, deren Auskleidung in der Regel aus gebrannten feuerfesten Erzeugnissen besteht.

In der EP 1 599 697 A1 wird vorgeschlagen, ungebrannte Steine aus feuerfestem Material zur Auskleidung von großvolumigen Industrieöfen der Zement-, Kalk-, Dolomit- und Magnesitindustrie zu verwenden, die im feuerseitigen Oberflächenbereich des Mauerwerks der Auskleidung Kohlenstoffträger in Form von Graphit oder Ruß und außerdem Kohlenstoff resultierend aus kohlenstoffhaltigem Bindemittel enthalten. Die Steine können aus unterschiedlichen feuerfesten Werkstoffen bestehen und u. a. auch Spinelle neben MgO aufweisen.

Die Kohlenstoffträger, insbesondere aber der Graphit verleihen den bekannten Steinen eine unerwünscht hohe Wärmeleitfähigkeit, so dass Maßnahmen zum Schutz des immer vorhandenen metallischen Ofenmantels getroffen werden müssen. Zudem verteuert der Graphit das feuerfeste Erzeugnis. Außerdem erzeugt Graphit eine glatte Oberfläche der Steine, die mauernde Personen bei der Erstellung einer Ofenauskleidung wegen Rutschgefahr behindert. Zudem wird bei längerer Einwirkung einer oxidierenden Atmosphäre auf die Kohlenstoffbindung des Steins trotz des Vorhandenseins von Antioxidantien, die den Kohlenstoff gegen Oxidation schützen sollen, die Bindewirkung des Gefüges bei relativ niedrigen Temperaturen schon geschwächt oder geht sogar verloren, wodurch die Festigkeiten des Gefüges der Steine erheblich beeinträchtigt werden.

Die AT 171428 B berichtet über die Verwendung von ungebrannten Steinen aus nicht saurem, feuerfesten Werkstoff u. a. in Zementdrehrohröfen, die als Bindemittel Verbindungen von Magnesia mit Kohlensäure in Folge einer CO₂-Behandlung aufweisen.

Derzeit werden die großvolumigen Industrieöfen zur Herstellung von Zement, Kalk, Magnesia und Doloma mit gebrannten feuerfesten MgO- und/oder CaObasierten Erzeugnissen in Form von gebrannten Steinen ausgekleidet. Diese gebrannten Steine sind
Magnesiachromitsteine
Magnesiaspinell- und Spinellsteine
Magnesiazirkonia- und Magnesiazirkonsteine
Magnesiahercynit- und Magnesiagalaxitsteine
Dolomit- und Dolomit-Magnesia-Steine
Forsterit- und Olivinsteine
Magnesiaforsteritsteine
Magnesiapleonaststeine
Magnesiasteine
(Gerald Routschka, Hartmut Wuthnow: Taschenbuch Feuerfeste Werkstoffe, 4. Auflage, 2007, Vulkan-Verlag, Seiten 171 bis 185 und 197 bis 235).

Man unterscheidet auf dem Sachgebiet der feuerfesten Erzeugnisse klassifikationsgemäß Magnesiaspinellsteine, die mindestens 40 Masse-% MgO aufweisen, von Spinellsteinen, die mehr als 20 Masse-% und weniger als 40 Masse-% MgO enthalten. Als Rohstoffe dienen Sinterspinelle und Schmelzspinelle.

Zur Spinellgruppe zählen im Rahmen der erfindungsgemäßen Verwendung auch die mineralogischen Zusammensetzungen von Hercynit, Galaxit, Pleonast.

Generell benötigen feuerfeste Steine, die aus Körnungen aus feuerfesten Werkstoffen aufgebaut sind, eine Bindung für die Körner der Körnung, um die Formbeständigkeit der Steine zu bewahren. Bei Raumtemperatur wird zur Formgebung von basischen feuerfesten Steinen, z. B. auf Basis von MgO für die Zementindustrie, in der Regel eine organische Bindung eingesetzt, z. B. aus Ligninsulfonat oder einer sauren Stärkelösung oder auch aus Kunstharz.

Nach der Formgebung durch Pressen ist der gepresste Stein formstabil, kann gehandhabt und auf Ofenwagen gesetzt werden. Anschließend erfolgt eine Trocknung, um das flüssige Wasser zu entfernen, und danach ein Brand. Bei diesem Brand, der oxidierend stattfindet, brennt das organische Bindemittel aus. Bindemittelreste sind zwar maximal bis zu Temperaturen von ca. 1000 °C nachweisbar, die Bindekraft geht jedoch ca. ab 400 °C verloren. Man spricht daher auch von einem temporären Bindemittel bzw. einer temporären Bindung. Die Festigkeit des Steines reicht dennoch aus, ihn durch den Brennprozess zu schleusen. Die keramische Sinterung, die dem gebrannten Stein seine Festigkeit für den Einsatz in einer Auskleidung eines Industrieofens verleiht, beginnt je nach feuerfestem Werkstoff bei ca. 900 °C, die Sintergeschwindigkeit steigt dann mit der Temperatur und wird auch durch die Brenndauer beeinflusst. Nach dem Brand liegt dann eine vollständige keramische Bindung über das gesamte Steingefüge aufgrund der Sinterung vor, organische Anteile an der Bindung sind nicht mehr anzutreffen, da der Kohlenstoff vollständig verbrannt ist.

Die bekannten derzeit verwendeten, gebrannten, oben genannten feuerfesten Erzeugnisse haben den Nachteil, dass sie sehr aufwändig zu produzieren sind, da nach dem Pressen ein Brennprozess stattfinden muss. Neben der Tatsache, dass dieser Brennprozess sehr energieintensiv ist, kann es zu einer Vielzahl von Fehlern kommen, nämlich zu sogenannten Brennfehlern. In diesem Zusammenhang sind beispielsweise Risse, Ausschmelzungen, Abtropfungen und Verformungen zu nennen. Zusätzlich führt die naturgemäß vorliegende Inhomogenität der Temperaturverteilung im Brennofen zu unterschiedlichen Eigenschaften der Steine, auch wenn die Zusammensetzung der grünen Steine vor dem Brennen jeweils gleich ist. So kann es zu unerwünschten Schwankungen der Steineigenschaften, z. B. der Festigkeit, der Porosität, der Elastizität kommen. Außerdem ist die Maßhaltigkeit der Steine von Stein zu Stein nicht ausreichend gewährleistbar, da aufgrund unterschiedlicher Schwindung eine Formveränderung der Steine beim Brand stattfindet.

Aufgabe der Erfindung ist, insbesondere die Nachteile der genannten bekannten, feuerfesten MgO- und/oder CaO-basierten, gebrannten und ungebrannten graphithaltigen Erzeugnisse weitestgehend zu vermeiden und graphitfreie feuerfeste Erzeugnisse mit entsprechend geringerer Wärmeleitfähigkeit mit geringem Aufwand zu produzieren, deren Maßhaltigkeit von Stein zu Stein gewährleistbar ist und die eine ausreichende Gefügefestigkeit für ein feuerfestes Erzeugnis in situ, also während des befeuerten Betriebs eines Industrieofens temperaturunabhängig gewährleisten.

Diese Aufgabe wird durch die Merkmale des Anspruchs 1 und der Ansprüche 7, und 10 gelöst. Vorteilhafte Weiterbildungen der Erfindung werden in den Unteransprüchen gekennzeichnet.

Nach einer Ausführungsform der Erfindung werden ungebrannte Steine aus Körnungen eines feuerfesten Werkstoffs oder eines Gemenges aus mindestens zwei feuerfesten Werkstoffen, die bisher für die oben aufgeführten gebrannten Steine eingesetzt wurden, verwendet, und daraus Steine gepresst.

Die feuerfesten Ausgangswerkstoffe für die oben aufgeführten bekannten gebrannten feuerfesten Erzeugnisse sind dem Fachmann bekannt. Sie werden außerdem in dem oben angegebenen Taschenbuch a.a.O. beschrieben. Genauere Angaben über bestimmte Zusammensetzungen der erfindungsgemäßen ungebrannten Erzeugnisse sind im Rahmen der Erfindung nicht erforderlich, weil die Hersteller für ihre feuerfesten Erzeugnisse eigenspezifische Rezepturen und Körnungen verwenden. Genauere Angaben sind im Rahmen der vorliegenden Erfindung auch nicht zielführend, weil es nicht auf spezifische Rezepturen ankommt, sondern auf die erfindungsgemäße Veränderung der Rezepturen bezüglich der Bindemittel und der Pressbeaufschlagung sowie gegebenenfalls einer Temperaturbehandlung nach dem Pressen.

Ungebrannte feuerfeste Werkstoffe oder Werkstoffgemenge für die oben aufgeführten gebrannten Steine sind nach bisherigem Kenntnisstand nicht geeignet, daraus Steine unter üblichen Pressbedingungen bezüglich Pressdruck und Pressvorrichtungstyp zu erzeugen, die in ungebranntem Zustand bezüglich Festigkeit und Reaktionen der Gefügebestandteile in situ beim Brennen von Zement, Kalk, Magnesia oder Doloma einsetzbar sind zur Auskleidung der genannten Industrieöfen und die die gleichen Feuerfest- und anderen Festigkeitseigenschaften gewährleisten wie die daraus gebrannten feuerfesten Erzeugnisse. Das liegt zum einen an nicht gezielt eingestellten Herstellungsmaßnahmen wie insbesondere an der Einstellung geeigneter empirisch zu ermittelnder Pressdrücke, geeigneter Trocknung und geeignetem Tempern. Zum anderen liegt es aber insbesondere auch daran, dass die Körnungen keine erfindungsgemäße abgestimmte Kombination mehrerer, temperaturabhängiger Bindemittelarten aufweisen, mit der mit mindestens einem ersten temporären Bindemittel bereits durch in der Regel Trocknung und/oder Tempern nach dem Pressen im Temperaturbereich zwischen 90 und 400, insbesondere zwischen 150 und 300 °C eine für die Handhabbarkeit und den Einbau in eine Auskleidung ausreichende Festigkeit gewährleistet wird und bei der mindestens ein zweites temporäres Bindemittel für die Gewährleistung einer ausreichenden Festigkeit in situ im Temperaturbereich zwischen 300 und 1000, insbesondere zwischen 400 und 900 °C vorgesehen ist. In noch höheren Temperaturbereichen gehen die Körner der feuerfesten Werkstoffe ihre werkstoffmäßig vorgegebene keramische Bindung ein.

Die ungebrannten feuerfesten Erzeugnisse müssen in situ von ihrer Ofeninnenseite bis zu ihrer Ofenmantelseite ein erhebliches in ihren Volumen vorhandenes Temperaturgefälle festigkeitsmäßig langzeitig aushalten bzw. ohne Beeinträchtigung überstehen, das zwischen auskleidungsofeninnenseitig hohen Temperaturen, z. B. 1500 °C, und auskleidungsaußenseitig bis fast Raumtemperatur liegt.

Gebrannte Steine weisen aufgrund des Brandes durchgehend eine keramische Bindung auf, die insoweit keine Probleme in situ bereitet.

Beim keramischen Brennen der feuerfesten Werkstoffkörnungen zu gebrannten Steinen, das in einem keramischen Brennofen ausgeführt wird, entsteht in der Regel ab etwa 900 °C als keramische Bindung ein charakteristisches feuerfestes Gefüge z. B. durch Sintern, Umwandlungen, Reaktionen in festem Zustand, Rekristallisationen, Schmelzphasenbildung sowie Lösungs- und Ausscheidungsvorgänge. Die ungebrannten, mit einem ersten temporären Bindemittel gefertigten Steine erzeugen dagegen in einer feuerseitigen Oberflächenzone in situ, also im befeuerten Industrieofen, über mindestens eine zweite temporäre Zwischenbindungsstufe letztlich auch eine keramische Bindung und ein Gefüge, das meist dem der gebrannten Steine gleicht, aber nicht immer identisch ist, weil neben der Temperatur und Zeit (Wärmeenergie) die Ofenatmosphäre des Industrieofens und die Bestandteile der Rohstoffe für die Erzeugung von Zement, Kalk, Magnesia und Doloma, die mit den Steinen in Berührung kommen, in situ auf die Minerale der feuerfesten Werkstoffe einer feuerseitigen Oberflächenzone der ungebrannten Steine einwirken.

Es hat sich in überraschender Weise gezeigt, dass der Einfluss dieser Industrieofenparameter in situ im Zusammenwirken mit einer erfindungsgemäßen Bindemittelkombination wesentlich dazu beitragen kann, die Eigenschaften der erfindungsgemäß verwendeten feuerfesten ungebrannten Erzeugnisse gegenüber den werkstoffmäßig gleichen gebrannten feuerfesten Erzeugnissen zu verbessern. Offenbar beeinflussen diese Parameter, insbesondere der Sauerstoffpartialdruck, bereits das sich in situ ausbildende mineralische Gefüge der keramischen Bindung in der Oberflächenzone derart, dass es z. B. keine mineralogisch bedingten Änderungen des Steinvolumens gibt, die zu einer Steinzerstörung führen könnten.

Mit der Erfindung werden ungebrannte Steine mit üblichen Steinformaten zur Verfügung gestellt (Taschenbuch, Seite 30, 31), die in situ eine ausreichende mauerwerkserhaltende Festigkeit aufweisen, egal welcher Temperatur und welchem Temperaturgefälle sie ausgesetzt sind. Da die Steine z. B. in Zementöfen typischerweise einem Temperaturgefälle ausgesetzt sind (Heißseite ca. 1450 °C, Kaltseite ca. 300 °C), ist ihre Bindung so abgestimmt, dass jederzeit ausreichend Festigkeit im gesamten Stein zur Verfügung steht. An der Heißseite, die in der Regel Temperaturen > 1200 °C ausgesetzt ist und die solche Temperaturen in einer z. B. bis 5 cm dicken Heißseitenzone aufweist, findet im Einsatz eine Sinterung statt, so dass sich dort eine keramische in situ-Bindung ausbildet. An einer Kaltseitenzone, die z. B. Temperaturen < 400 °C aufweist und z. B. bis 5 cm vom Steinfuß gerechnet dick sein kann, leistet die oben beschriebene temporäre organische Bindung des ersten Bindemittels ihren Beitrag zur Festigkeit, sie ist dort mithin erfindungsgemäß nicht temporär, sondern dauerhaft. Damit würde eine dazwischen liegende Mittenzone des Steines in ein "Festigkeitsloch" fallen, da die temporäre organische Bindung des ersten Bindemittels nicht mehr vorhanden ist und eine Sinterung noch nicht stattfinden kann, wenn gemäß vorliegender Erfindung nicht das zweite temporäre Bindemittel vorhanden wäre.

Nach der Erfindung werden insbesondere die folgenden ungebrannten graphitfreien, mindestens ein erstes temporäres und mindestens ein zweites temporäres Bindemittel aufweisenden feuerfesten Erzeugnisse, insbesondere in Form von ungebrannten, formgepressten Formsteinen verwendet:
Magnesiachromit
Magnesiaspinell
Spinell
Magnesiazirkonia
Magnesiazirkon
Magnesiahercynit
Magnesiagalaxit
Dolomit-, Dolomit-Magnesia
Calcia
Forsterit
Olivin
Magnesiaforsterit
Magnesiapleonast
Magnesia

Wie bereits oben ausgeführt, können die jeweils an sich bekannten Rezepturen für die Erzeugnisse verwendet werden, und jeder Hersteller kann von seinen üblichen Rezepturen ausgehen, so dass für die Ausführbarkeit der Erfindung keine genaueren Angaben zu den Rezepturen gemacht zu werden brauchen.

Wesentlich ist, dass Steine aus den Rezepturen durch Pressen hergestellt werden, die Druckfestigkeiten über 20 MPa, vorzugsweise zwischen 30 und 130 MPa, insbesondere zwischen 40 und 120 MPa, ganz vorzugsweise zwischen 50 und 100 MPa vorzugsweise nach einer thermischen Behandlung nach dem Pressen und daraus resultierender Verfestigung durch eine temporäre Bindung eines ersten Bindemittels aufweisen.

Die angegebenen Festigkeiten werden z. B. durch folgende Maßnahmen - einzeln oder in Kombination - erzielt:
a) Kornverteilung der Werkstoffkörnungen
   Es wird vorzugsweise eine Kornverteilung nach Fuller, Furnas oder Litzow angestrebt. Zur Erhöhung der Temperaturwechselbeständigkeit kann auch eine an sich bekannte Mischungslücke vorgesehen werden.
b) Formgebung durch Pressen für Steine
   Vorzugsweise werden hydraulische Pressen oder Spindelpressen oder Schlagpressen oder Kniehebelpressen oder Vakuumpressen oder isostatische Pressen oder auch Vibrationsverdichtungsmaschinen eingesetzt und Pressdrücke z. B. zwischen 50 und 250, insbesondere zwischen 80 und 200 MPa aufgewendet.
c) Temperaturbehandlung
   c₁) Trocknung
      Die Werkstoff-Bindemittelgemenge weisen in der Regel Flüssigkeitsgehalte z. B. aus den Bindemitteln und/oder einen Wassergehalt auf, die durch Trocknung insbesondere zwischen 90 und 400 °C, z. B. nach dem Pressen oder nach dem Einbau der Steine im Industrieofen oder nach dem Einbau der ungeformten Massen in einen Industrieofen, bevor die eigentliche Befeuerung einwirkt, vorzugsweise vollständig entfernt werden oder bis auf einen Rest unter 0,8, insbesondere unter 0,5 Gew.-% entfernt werden. Dies kann je nach Anwendung die anhaftende Feuchte und gegebenenfalls das chemisch gebundene Kristallwasser beinhalten.
   c₂) Tempern
      Sofern die Werkstoff-Bindemittelgemenge entsprechende temporäre Bindemittel aufweisen, die erst durch Tempern ihre Bindemitteleigenschaften erbringen, wird in Temperaturbereichen unter 1000 °C, insbesondere zwischen 200 und 800 °C vor der Verwendung bei Steinen oder nach dem Erstellen einer Auskleidung bei ungeformten Massen getempert.
d) Bindemittel
   Verwendet wird mindestens ein erstes temporäres Bindemittel, das die Aufrechterhaltung einer ausreichenden Festigkeit der ungebrannten Steine für ihre Handhabbarkeit bei Raumtemperatur nach der Temperaturbehandlung und bis z. B. 500 °C im gesamten Stein gewährleistet mindestens bis zum Einsetzen der Bindewirkung eines zweiten temporären, in situ bei höheren Temperaturen, z. B. im Temperaturbereich zwischen 300 und 1000 °C. Das zweite temporäre Bindemittel gewährleistet ausreichende Festigkeiten bis zum Einsetzen einer keramischen Bindung, die in der Regel bei 900 °C einsetzt. Es ist plausibel, dass sich die Temperaturbereiche bezüglich der finalen Bindewirkung des ersten temporären Bindemittels mit den Temperaturbereichen des zweiten temporären Bindemittels sowie der Temperaturbereich des zweiten temporären Bindemittels mit dem Beginn der keramischen Bindung überschneidet bzw. überschneiden kann. Der Begriff "temporär" meint, dass die Bindung des Bindemittels verlorengeht bei Einwirkung von hohen Temperaturen z. B. über 400 °C für das erste Bindemittel, und für das zweite Bindemittel kann sie verloren gehen z. B. über 900 °C insbesondere über 1000 °C bzw. bei einsetzender keramischer Bindung.

Als ein erstes temporäres Bindemittel wird bevorzugt mindestens ein Bindemittel aus der folgenden Gruppe verwendet:
Ligninsulfonat, Kunstharz, Teer, Pech, Novolak, Dextrin, übliche organische Säuren (z. B. Zitronensäure, Apfelsäure, Essigsäure), Polyvinylalkohol, Gummi Arabicum, Saccharidzubereitungen, sowie Mischungen daraus, insbesondere auch mit Phosphorsäure und/oder Phosphaten
wobei insbesondere mindestens ein Bindemittel aus der folgenden Gruppe:
Ligninsulfonat, Kunstharz, organische Säuren, Polyvinylalkohol, insbesondere auch Mischungen mit Phosphorsäure und/oder Phosphaten
und ganz besonders aus der folgenden Gruppe verwendet wird:
Ligninsulfonat, Kunstharz, insbesondere auch Mischungen mit Phosphorsäure und/oder Phosphaten.

Als ein zweites temporäres Bindemittel wird mindestens ein Bindemittel aus der folgenden Gruppe verwendet:
Die Metallpulver Al, Mg, Si, Fe und deren Legierungen, SiC, B₄C, Si₃N₄, AIN, BN, Sialon, feinkörnige mineralische Werkstoffe, z. B. MgO, Spinell, Tonerde, Zirkonoxid, Siliciumdioxid, speziell Mikrosilica, Calciumaluminate, Aluminiumsilicate und Tone, eisenhaltige Verbindungen, speziell eisenoxidhaltige Verbindungen, z. B. Magnetit, Hämatit, Goethit, Limonit, Siderit
wobei insbesondere mindestens ein Bindemittel aus der folgenden Gruppe:
Al, Mg, Si, Fe, feinkörnige mineralische Werkstoffe, z. B. Spinell, Tonerde, Zirkonoxid, eisenhaltige Verbindungen, z. B. Magnetit, Hämatit
und ganz besonders aus der folgenden Gruppe verwendet wird:
Al, Fe, mineralische Werkstoffe, z. B. Tonerde, Zirkonoxid, eisenhaltige Verbindungen, z. B. Magnetit, Hämatit.

Das erste temporäre Bindemittel wird in der Regel flüssig sowie auch als Pulverzusatz und dann mit einer Feinheit < 150 µm, insbesondere < 90 µm und insbesondere dabei in Mengen zwischen 0,5 und 8 Gew.-%, insbesondere zwischen 1 und 4 Gew.-%, bezogen auf die trockenen Körnungen der feuerfesten Werkstoffe verwendet.

Das zweite temporäre Bindemittel wird mit einer Feinheit < 150 µm, insbesondere < 90 µm und dabei in Mengen zwischen 0,5 und 15 Gew.-%, insbesondere zwischen 1 und 10 Gew.-% bezogen auf die trockenen Körnungen der feuerfesten Werkstoffe verwendet.

Da die Steine für den großvolumigen Industrieofen nicht mehr gebrannt werden müssen, sind die Steineigenschaften wesentlich homogener. Die Festigkeit dieser Erzeugnisse liegt im Einsatz längerfristig teilweise höher als bei gebrannten Produkten. Die Nachteile der gebrannten Steine können vermieden werden. Es kann eine signifikante Maßhaltigkeit gewährleistet werden, weil die Brennfehler vermieden werden, woraus resultiert, dass der Einbau der Steine maßgeblich erleichtert wird. Zusätzlich resultiert aus der Verwendung von ungebrannten Steinen und den formbaren Massen eine erhebliche Energieeinsparung.

Die erfindungsgemäße Verwendbarkeit der ausgewählten, ungebrannten, feuerfesten, geformten feuerfesten Erzeugnisse läßt sich auch übertragen auf die üblicherweise in bestimmten Zonen der genannten großvolumigen Industrieöfen verwendeten anderen Steinsorten, z. B. aus Schamotte oder SiC+Andalusit oder SiC+Kaolin oder Bauxit oder Bauxit + SiC oder Andalusit oder Mullit oder Mullit + SiC.

Um die temperaturabhängig gestaffelten Bindemittelbindungen zu quantifizieren, werden beispielhaft Magnesiaspinellsteine gefertigt. Gemenge auf Basis von Magnesia und Spinell, die einer Korngrößenverteilung nach Fuller folgen, werden mit dem ersten, temporären organischen Bindemittel Ligninsulfonat und mit einem zweiten, temporären Bindemittel in Form von Metallpulvern und Phosphatbindern versetzt und die Gemenge zu Steinen mit einem Pressdruck von 130 MPa und den Abmessungen eines Zementofensteins B622 (nach Merkblatt WE 9, Verein Deutscher Zementwerke, Düsseldorf, Mai 1966) gepresst. Anschließend werden diese Steine bei verschiedenen Temperaturen gebrannt, und zwar bei 400, 600, 800, 1000, 1400 °C. Nach dem Abkühlen wird die Kaltbiegefestigkeit (KBF) nach DIN EN 993-6 als Maß für die Bindung des Gefüges bestimmt. Wenn keine ausreichende Bindung vorhanden ist, liegt die Kaltbiegefestigkeit < 1 MPa, d. h., der Stein zerbricht schnell und ist für den Einsatz ungeeignet. Wenn sich dagegen eine Bindung ausbildet, die den Beanspruchungen z. B. in einem Zementdrehofen genügt, so ergibt sich eine Festigkeit, die in der Größenordnung der Kaltbiegefestigkeit von gebrannten Steinen liegen sollte, also bei der Prüfung > 4 MPa für alle Temperaturen.

Die Kaltdruckfestigkeit (KDF) nach DIN EN 993-5 folgt einem ähnlichen Trend, wobei diese Größe weniger genau die Bindung im Gefüge beschreibt.

In der folgenden Tabelle sind die Eigenschaften der Steine dargestellt.

| | | | | | |
|---|---|---|---|---|---|
| Magnesiasinter | 84 | 81 | 79 | 79 | Gew.-% |
| Spinell | 16 | 16 | 16 | 16 | Gew.-% |
| Magnetit | - | - | - | 5 | Gew.-% |
| Eisenpulver | - | 3 | 3 | - | Gew.-% |
| Na-Phosphat | - | - | 2 | - | Gew.-% |
| Ligninsulfonat | 3.9 | 3.9 | 3.9 | 3.9 | Gew.-% |
| | | | | | |
| Dichte | 3.08 | 3.05 | 3.08 | 3.06 | g/cm³ |
| | | | | | |
| KBF 20 °C | 10.33 | 10.14 | 9.83 | 9.74 | MPa |
| KBF 400 °C | 3.41 | 5.22 | 15.21 | 6.04 | MPa |
| KBF 600 °C | 1.74 | 4.42 | 10.68 | 4.08 | MPa |
| KBF 800 °C | 0.89 | 4.59 | 4.74 | 6.83 | MPa |
| KBF 1000 °C | 1.78 | 5.28 | 5.35 | 7.13 | MPa |
| KBF 1400 °C | 5.28 | 5.77 | 5.83 | 4.65 | MPa |
| | | | | | |
| KDF 20 °C | 91.10 | 89.13 | 112.30 | 115.25 | MPa |
| KDF 400 °C | 47.30 | 96.55 | 78.50 | 135.15 | MPa |
| KDF 600 °C | 20.45 | 57.75 | 55.50 | 110.30 | MPa |
| KDF 800 °C | 7.75 | 54.70 | 52.40 | 74.40 | MPa |
| KDF 1000 °C | 15.25 | 75.05 | 78.12 | 83.50 | MPa |
| KDF 1400 °C | 70.65 | 97.31 | 81.17 | 73.77 | MPa |

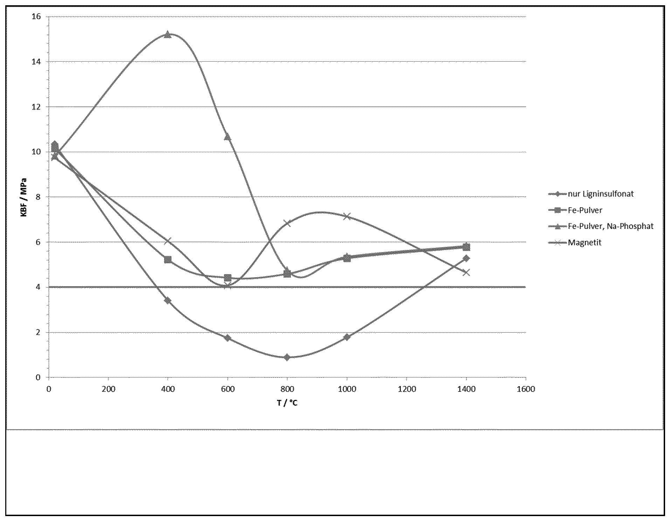

Die Tabelle zeigt ebenso wie die mit den Werten der Tabelle erstellte Fig. 1 deutlich den positiven Effekt des Zusatzes von Eisenpulver (stellvertretend für Al, Mg, Si, Fe und deren Legierungen), durch den sich die Festigkeiten (Spalte 2) signifikant gegenüber nur mit Ligninsulfonat gebundenen Steinen nach Temperaturbehandlung (Spalte 1) erhöhen lassen. Der gleiche Effekt wird durch Zusatz von feinteiligen mineralischen Werkstoffen ≤ 150 µm, vorzugsweise ≤ 90 µm erreicht, hier stellvertreten durch Magnetit, durch den sich die Festigkeiten (Spalte 4) signifikant gegenüber nur mit Ligninsulfonat gebundenen Steinen nach Temperaturbehandlung (Spalte 1) erhöhen lassen. Der Zusatz von Natriumphosphat erhöht die Festigkeiten zusätzlich (Spalte 3).

Während die nur mit Ligninsulfonat gebundenen Steine also signifikante Schwächen im Temperaturbereich zwischen 400 °C und 1000 °C zeigen (die keramische Sinterung wird in dem hohen Festigkeitswert der Steine bei 1400 °C deutlich), zeigen alle anderen Steine über alle Temperaturen Festigkeiten, die über dem Mindestwert der Kaltbiegefestigkeit von 4 MPa von gebrannten Steinen liegen, Fig. 1.

Die Fig. 1 zeigt auch, dass weiteres Potential auch in zusätzlichen Kombinationen der genannten Bindemittel besteht, zum Beispiel durch den gemeinsamen Zusatz von Magnetit, Fe-Pulver und Natriumphosphat, wodurch die Festigkeit bei ca. 800 °C weiter angehoben wird.

## Patentansprüche

1. Verwendung von ungebrannten, graphitfreien, durch Pressen geformten, feuerfesten Steinen enthaltend Bindemittel und jeweils Körungen mindestens eines feuerfesten, bei Temperaturen über 900 °C, insbesondere über 1000 °C, eine keramische Bindung eingehenden Werkstoffes als feuerseitige, feuerfeste Auskleidung von großvolumigen, mit oxidierender oder im Wesentlichen oxidierender Atmosphäre betriebenen Industrieöfen zur Herstellung von Zement, Kalk, Magnesia und Doloma , wobei die Steine eine Kaltdruckfestigkeit über 20 MPa, vorzugsweise zwischen 30 und 130, insbesondere zwischen 40 und 120 MPa aufweisen, und die Steine mindestens ein erstes temporäres Bindemittel enthalten, das eine ausreichende Bindung der Körner der Körnung in einem Temperaturbereich zwischen Raumtemperatur und 500 °C, insbesondere zwischen Raumtemperatur und 400 °C gewährleistet, und mindestens ein zweites temporäres Bindemittel enthalten, das eine ausreichende Bindung der Körner der Körnung im Temperaturbereich zwischen 300 und 1000, insbesondere zwischen 400 und 900 °C gewährleistet, wobei eine ausreichende Bindung vorhanden ist, wenn die Steine nach dem Abkühlen eine Kaltbiegefestigkeit nach DIN EN 993-6 von ≥ 1 MPa für alle Temperaturen bis 1400°C aufweisen,
wobei als zweites temporäres Bindemittel mindestens ein Bindemittel aus der folgenden Gruppe enthalten ist:
Al Mg, Si, Fe und deren Legierungen, SiC, B₄C, Si₃N₄, AlN, BN, Sialon, feinkörnige mineralische Werkstoffe, z.B. MgO, Spinell, Tonerde, Zirkonoxid, Siliciumdioxid, speziell Microsilica, Calciumaluminate, Aluminiumsilicate und Tone, eisenhaltige Verbindungen, speziell eisenoxidhaltige Verbindungen, z.B. Magnetit, Hämatit, Goethit, Limonit, Siderit, in Mengen zwischen 0.5 und 15%, insbesondere zwischen 1 und 4%, bezogen auf den trockenen Werkstoff oder auf das trockene Gemenge aus feuerfesten Werkstoffen, dabei mit Feinheiten < 150 µm, vorzugsweise < 90 µm.
wobei es sich bei den Steinen um Steine folgender Steinsorten handelt:
Magnesischromitsteine
Magnesiaspinell- und Spinellsteine
Magensiazirkonia- und Magnesiazirkonsteine
Magnesiahercynit- und Magnesiagalaxitsteine
Dolomit- Dolomit-Magnesia- und Kalk-Steine
Forsterit- und Olivinsteine
Magnesiaforsteritsteine
Magnesiapleonaststeine
Magnesiasteine.

2. Verwendung nach Anspruch 1, **dadurch**
**gekennzeichnet, dass** die Körnungen eine Kornverteilung nach Litzow, Fuller oder Furnas aufweisen.

3. Verwendung nach Anspruch 1 und/oder 2
**dadurch gekennzeichnet, dass**
die Steine übliche Steinformate aufweisen und z. B. mit Pressdrücken zwischen 50 und 250, insbesondere zwischen 80 und 200 MPa gepresst worden sind.

4. Verwendung nach einem oder mehreren der Ansprüche 1 bis 3, **dadurch gekennzeichnet, dass**
die Steine vor der Verwendung bei Temperaturen zwischen 90 und 400, insbesondere zwischen 100 und 350 °C behandelt werden bis auf Flüssigkeitsgehalte unter 0,8, insbesondere unter 0,5 Gew.-%.

5. Verwendung nach einem oder mehreren der Ansprüche 1 bis 4,
**dadurch gekennzeichnet, dass**
die Steine in Temperaturbereichen unter 1000 °C, insbesondere zwischen 200 und 800 °C vor der Verwendung oder in situ getempert werden.

6. Verwendung nach einem oder mehreren der Ansprüche 1 bis 5,
**dadurch gekennzeichnet, dass**
als erstes temporäres Bindemittel ein Bindemittel aus der folgenden Gruppe enthalten ist:
Lingninsulfonat, Kunstharz, Teer, Pech, Novolak, Dextrin, organische Säuren (z. B. Zitronensäure, Apfelsäure, Essigsäure), Polyvinylalkohol, Gummi Arabicum, Saccharidzubereitungen, sowie Mischungen daraus, vorzugsweise auch mit Phosphorsäure und/oder Phosphaten, insbesondere als Flüssigkeit in Mengen zwischen 0,5 und 8 Gew.-% bezogen auf den trockenen Werkstoff oder das trockene Gemenge aus feuerfesten Werkstoffen, dabei im Falle des Pulverzusatzes insbesondere mit Feinheiten < 150, vorzugsweise < 90 µm.

7. Großvolumiger Industrieofen, eingerichtet und ausgebildet zur Herstellung von Zement, Kalk, Magnesia oder Doloma und feuerfest ausgekleidet gemäß den Verwendungen nach einem oder mehreren der Ansprüche 1 bis 6.

8. Verwendung von ungebrannten, graphitfrien, durch Pressen geformten, feuerfesten Steinen enthaltend Bindemittel und jeweils Körnungen mindestens eines feuerfesten, bei Temperaturen über 900 °C, insbesondere über 1000 °C, eine keramische Bindung eingehenden Werkstoffes als feuerseitige, feuerfeste Auskleidung von großvolumigen, mit oxidierender oder im Wesentlichen oxidierender Atmosphäre betriebenen Industrieöfen, wobei die Steine eine Kaltdruckfestigkeit über 20 MPa, vorzugsweise zwischen 30 und 130, insbesondere 40 und 120 MPa aufweisen, und die Steine mindestens ein erstes temporäres Bindemittel enthalten, das eine Bindung der Körner der Körnung in einem Temperaturbereich zwischen Raumtemperatur und 500 °C, insbesondere zwischen Raumtemperatur und 400 °C gewährleistet, und mindestens ein zweites temporäres Bindemittel enthalten, das eine Bindung der Körner der Körnung im Temperaturbereich zwischen 300 und 1000, insbesondere zwischen 400 und 900 °C gewährleistet, wobei eine ausreichende Bindung vorhanden ist, wenn die Steine nach dem Abkühlen eine Kaltbiegefestigkeit nach DIN EN 993-6 von ≥1 MPa für alle Temperaturen bis 1400°C aufweisen,
wobei als zweites temporäres Bindemittel mindestens ein Bindemittel aus der folgenden Gruppe enthalten ist:
Al, Mg, Si, Fe und deren Legierungen, SiC, B₄C, Si₃N₄, AlN, BN, Sialon, feinkörnige mineralische Werkstoffe, z.B, MgO, Spinell, Tonerde, Zirkonoxid, Siliciumdioxid, speziell Microsilica, Calciumaluminate, Aluminiumsilicate und Tone, eisenhattige Verbindungen, speziell eisenoxidhaltige Verbindungen, z.B. Magnetit, Hämatit, Goethit, Limonit, Siderit, in Mengen zwischen 0,5 und 15 %, insbesondere zwischen 1 und 4 %, bezogen auf den trockenen Werkstoff oder auf das trockene Gemenge aus feuerfesten Werkstoffen, dabei mit Feinheiten < 150 µm, vorzugsweise < 90 µm,
wobei es sich bei den Steinen zum Steine folgender Steinsorten handelt:
Schamottesteine
Steine auf Basis SiC + Andalusit
Steine auf Basis SiC + Kaolin
Steine auf Basis Bauxit
Steine auf Basis Bauxit + SiC
Steine auf Basis Andalusit
Steine auf Basis Mullit
Steine auf Basis Mullit + SiC.

9. Verwendung nach Anspruch 8,
**gekennzeichnet durch**
die kennzeichnenden Merkmale eines oder mehrerer der Ansprüche 2 bis 6.

10. Großvolumiger Industrieofen, feuerfest ausgekleidet gemäß den Verwendungen nach Anspruch 8 und/oder 9.

## Claims

1. The use of unfired, graphite-free refractory bricks formed by pressing, containing binders and in each case granulations of at least one refractory material which forms a ceramic bond at temperatures above 900°C, in particular above 1000°C as a firing-side refractory lining of large-volume industrial furnaces operated with an oxidising or substantially oxidising atmosphere for the purpose of producing cement, lime, magnesia and doloma, wherein the bricks have a cold compression strength of greater than 20 MPa, preferably between 30 and 130, in particular between 40 and 120 MPa, and the bricks contain at least one first temporary binder, which ensures adequate binding of the grains of the granulation in a temperature range between room temperature and 500°C, in particular between room temperature and 400°C, and at least one second temporary binder, which ensures adequate binding of the grains of the granulation in the temperature range between 300 and 1000, in particular between 400 and 900°C, wherein there is adequate binding if, after cooling, the bricks have a cold bending strength according to DIN EN 993-6 of ≥ 1 MPa for all temperatures up to 1400°C
wherein at least one binder from the following group is present as a second temporary binder:
Al, Mg, Si, Fe and their alloys, SiC, B₄C, Si₃N₄, AlN, BN, sialon, fine-grained mineral materials, e.g. MgO, spinel, alumina, zirconium oxide, silicon dioxide, especially microsilica, calcium aluminates, aluminium silicates and clays, compounds containing iron, especially compounds containing iron oxide, e.g. magnetite, haematite, goethite, limonite, siderite in amounts between 0.5 and 15%, in particular between 1 and 4% with reference to the dry material or the dry mixture of refractory materials, with fineness values here of ≤ 150 µm, preferably ≤ 90 µm,
wherein the bricks are bricks of the following brick types:
magnesia chromite bricks,
magnesia spinel and spinel bricks,
magnesia zirconia and magnesia zircon bricks,
magnesia hercynite and magnesia galaxite bricks,
dolomite, dolomite-magnesia, and lime bricks,
forsterite and olivine bricks,
magnesia forsterite bricks,
magnesia pleonast bricks,
magnesia bricks.

2. A use according to Claim 1,
**characterised in that**
the granulations have a grain distribution according to Litzow, Fuller or Furnas.

3. A use according to Claim 1 and/or 2,
**characterised in that**
the bricks have conventional brick formats and have been pressed for example with pressing pressures of between 50 and 250, in particular between 80 and 200 MPa.

4. A use according to one or more of Claims 1 to 3,
**characterised in that**
the bricks are treated before use at temperatures between 90 and 400, in particular between 100 and 350°C, to liquid contents below 0.8, in particular below 0.5 wt.-%.

5. A use according to one or more of Claims 1 to 4,
**characterised in that**
the bricks are tempered in temperature ranges below 1000°C, in particular between 200 and 800°C, before use or in situ.

6. A use according to one or more of Claims 1 to 5,
**characterised in that** a binder from the following group is present as a first temporary binder:
lignin sulphonate, synthetic resin, tar, pitch, novolac, dextrin, organic acids (e.g. citric acid, malic acid, acetic acid), polyvinyl alcohol, gum arabic, saccharide preparations, as well as mixtures thereof, preferably also with phosphoric acid and/or phosphates, in particular as a liquid in amounts between 0.5 and 8 wt.-% with reference to the dry material or the dry mixture of refractory materials, in particular with fineness values here of < 150 µm, preferably < 90 µm, in the case of a powder additive.

7. A large-volume industrial furnace equipped and constructed for the production of cement, lime, magnesia or doloma and lined with refractory material in accordance with the uses according to one or more of Claims 1 to 6.

8. The use of unfired, graphite-free refractory bricks formed by pressing, containing binders and in each case granulations of at least one refractory material which forms a ceramic bond at temperatures above 900°C, in particular above 1000°C as a firing-side refractory lining of large-volume industrial furnaces operated with an oxidising or substantially oxidising atmosphere, wherein the bricks have a cold compression strength of greater than 20 MPa, preferably between 30 and 130, in particular 40 and 120 MPa, and the bricks contain at least one first temporary binder, which ensures binding of the grains of the granulation in a temperature range between room temperature and 500°C, in particular between room temperature and 400°C, and at least one second temporary binder, which ensures binding of the grains of the granulation in the temperature range between 300 and 1000, in particular between 400 and 900°C, wherein there is adequate binding if, after cooling, the bricks have a cold bending strength according to DIN EN 993-6 of ≥1 MPa for all temperatures up to 1400°C
wherein at least one binder from the following group is present as a second temporary binder:
Al, Mg, Si, Fe and their alloys, SiC, B₄C, Si₃N₄, AlN, BN, sialon, fine-grained mineral materials, e.g. MgO, spinel, alumina, zirconium oxide, silicon dioxide, especially microsilica, calcium aluminates, aluminium silicates and clays, compounds containing iron, especially compounds containing iron oxide, e.g. magnetite, haematite, goethite, limonite, siderite in amounts between 0.5 and 15%, in particular between 1 and 4% with reference to the dry material or the dry mixture of refractory materials, with fineness values here of ≤ 150 µm, preferably ≤ 90 µm,
wherein the bricks are bricks of the following brick types:
chamotte bricks,
bricks based on SiC + andalusite,
bricks based on SiC + kaolin,
bricks based on bauxite,
bricks based on bauxite + SiC,
bricks based on andalusite,
bricks based on mullite,
bricks based on mullite + SiC,

9. A use according to Claim 8,
**characterised by**
the characterising features of one or more of Claims 2 to 6.

10. A large-volume industrial furnace, refractory-lined in accordance with the uses according to Claim 8 and/or 9.

## Revendications

1. Utilisation de pierres non cuites, sans graphite, formées par pressage, réfractaires contenant des liants et respectivement des granulométries d'au moins un matériau réfractaire, formant une liaison céramique, à des températures supérieures à 900 °C, en particulier supérieures à 1000 °C en tant que revêtement réfractaire côté feu de grands fours industriels fonctionnant avec une atmosphère oxydante ou sensiblement oxydante pour la fabrication de ciment, de chaux, de magnésie et de dolomie, dans laquelle les pierres présentent une résistance à la pression à froid supérieure à 20 MPa, de préférence entre 30 et 130, en particulier entre 40 et 120 MPa, et les pierres contiennent au moins un premier liant temporaire, qui garantit une liaison suffisante des grains de la granulométrie dans une plage de température entre la température ambiante et 500 °C, en particulier entre la température ambiante et 400 °C, et contiennent au moins un deuxième liant temporaire, qui garantit une liaison suffisante des grains de la granulométrie dans la plage de température entre 300 et 1000, en particulier entre 400 et 900 °C, dans laquelle il y a une liaison suffisante, lorsque les pierres présentent après le refroidissement une résistance à la flexion à froid selon la norme DIN EN 993-6 ≥ 1 MPa pour toutes les températures jusqu'à 1400 °C,
dans laquelle au moins un liant du groupe suivant est contenu comme deuxième liant temporaire :
Al, Mg, Si, Fe et leurs alliages, SiC, B₄C, Si₃N₄, AIN, BN, sialon, matériaux minéraux à grains fins, par exemple MgO, spinelle, argile, oxyde de zircon, dioxyde de silicium, en particulier microsilices, aluminates de calcium, silicates d'aluminium et argiles, liaisons contenant du fer, en particulier liaisons contenant de l'oxyde de fer, par exemple magnétite, hématite, goethite, limonite, sidérite en quantités entre 0,5 et 15 %, en particulier entre 1 et 4 %, par rapport au matériau sec ou au mélange sec de matériaux réfractaires, ce faisant avec des finesses < 150 µm, de préférence < 90 µm,
dans laquelle les pierres sont des pierres de types suivants :
pierre de magnésie-chromite
pierre de magnésie-spinelle et de spinelle
pierre de magnésie-zircone et de magnésie-zircon
pierre de magnésie-hercynite et de magnésie-galaxite
pierre de dolomite, de dolomite-magnésie et de chaux
pierre de fostérite et d'olivine
pierre de magnésie-fostérite
pierre de magnésie pléonaste
pierre de magnésie.

2. Utilisation selon la revendication 1,
**caractérisée en ce que**
les granulométries présentent une répartition granulométrique selon Litzow, Fuller ou Fumas.

3. Utilisation selon la revendication 1 et/ou 2
**caractérisée en ce que**
les pierres présentent des formats de pierres habituelles et ont été pressées, par exemple avec des pressions de pressage entre 50 et 120, en particulier entre 80 et 200 MPa.

4. Utilisation selon une ou plusieurs des revendications 1 à 3,
**caractérisée en ce que**
les pierres sont traitées avant l'utilisation à des températures entre 90 et 400, en particulier entre 100 et 350 °C jusqu'à des teneurs en liquide inférieures à 0,8, en particulier inférieures à 0,5 % en poids.

5. Utilisation selon une ou plusieurs des revendications 1 à 4,
**caractérisée en ce que**
les pierres sont recuites dans des plages de température inférieures à 1000 °C, en particulier entre 200 et 800 °C avant l'utilisation ou in situ.

6. Utilisation selon une ou plusieurs des revendications 1 à 5,
**caractérisée en ce que**
un liant du groupe suivant est contenu comme premier liant temporaire :
sulfonate de lignine, résine synthétique, goudron, brai, novolaque, dextrine, acides organiques (par exemple acide citrique, acide malique, acide acétique), alcool de polyvinyle, gomme arabique, préparations de saccharide, ainsi que des mélanges de ceux-ci, de préférence aussi avec de l'acide phosphorique et/ou des phosphates, en particulier sous forme de liquide dans des quantités entre 0,5 et 8 % en poids par rapport au matériau sec ou au mélange sec de matériaux réfractaires, ce faisant dans le cas du supplément de poudre en particulier avec des finesses < 150, de préférence < 90 µm.

7. Grand four industriel, aménagé et configuré pour la fabrication de ciment, de chaux, de magnésie ou de dolomie et revêtu de manière réfractaire conformément aux utilisations selon une ou plusieurs des revendications 1 à 6.

8. Utilisation de pierres non cuites, sans graphite, formées par pressage, réfractaires contenant des liants et respectivement des granulométries d'au moins un matériau réfractaire, formant une liaison céramique, à des températures supérieures à 900 °C, en particulier supérieures à 1000 °C en tant que revêtement réfractaire côté feu de grands fours industriels fonctionnant avec une atmosphère oxydante ou sensiblement oxydante, dans laquelle les pierres présentent une résistance à la pression à froid supérieure à 20 MPa, de préférence entre 30 et 130, en particulier entre 40 et 120 MPa, et les pierres contiennent au moins un premier liant temporaire, qui garantit une liaison des grains de la granulométrie dans une plage de température entre la température ambiante et 500 °C, en particulier entre la température ambiante et 400 °C, et contiennent au moins un deuxième liant temporaire, qui garantit une liaison des grains de la granulométrie dans la plage de température entre 300 et 1000, en particulier entre 400 et 900 °C, dans laquelle il y a une liaison suffisante, lorsque les pierres présentent après le refroidissement une résistance à la flexion à froid selon la norme DIN EN 993-6 ≥ 1 MPa pour toutes les températures jusqu'à 1400 °C,
dans laquelle au moins un liant du groupe suivant est contenu comme deuxième liant temporaire :
Al, Mg, Si, Fe et leurs alliages, SiC, B₄C, Si₃N₄, AIN, BN, sialon, matériaux minéraux à grains fins, par exemple MgO, spinelle, argile, oxyde de zircon, dioxyde de silicium, en particulier microsilices, aluminates de calcium, silicates d'aluminium et argiles, liaisons contenant du fer, en particulier liaisons contenant de l'oxyde de fer, par exemple magnétite, hématite, goethite, limonite, sidérite, en particulier en quantités entre 0,5 et 15 %, en particulier entre 1 et 4 %, par rapport au matériau sec ou au mélange sec de matériaux réfractaires, ce faisant avec des finesses < 150 µm, de préférence < 90 µm,
dans laquelle les pierres sont des pierres de types suivants :
pierre de chamotte
pierre à base de SiC + andalousite
pierre à base de SiC + kaolin
pierre à base de bauxite
pierre à base de bauxite + SiC
pierre à base d'andalousite
pierre à base de mullite
pierre à base de mullite + SiC.

9. Utilisation selon la revendication 8,
**caractérisée par**
les spécificités caractérisantes d'une ou plusieurs des revendications 2 à 6.

10. Grand four industriel, revêtu de manière réfractaire conformément aux utilisations selon la revendication 8 et/ou 9.
